(19) **Europäisches Patentamt**

**European Patent Office**

**Office européen des brevets**

(11) **EP 1 074 165 B1**

(12) **EUROPÄISCHE PATENTSCHRIFT**

(45) Veröffentlichungstag und Bekanntmachung des Hinweises auf die Patenterteilung:
**19.12.2001 Patentblatt 2001/51**

(21) Anmeldenummer: **99924770.3**

(22) Anmeldetag: **01.04.1999**

(51) Int Cl.$^7$: **H04Q 7/38**

(86) Internationale Anmeldenummer:
**PCT/DE99/01020**

(87) Internationale Veröffentlichungsnummer:
**WO 99/56489 (04.11.1999 Gazette 1999/44)**

(54) **VERFAHREN ZUR ZUORDNUNG VON KANALNUMMERN ZU PHYSIKALISCHEN ÜBERTRAGUNGSKANÄLEN FÜR DEN DRAHTLOSEN, PROTOKOLLORIENTIERTEN INFORMATIONSAUSTAUSCH**

METHOD FOR ALLOCATING CHANNEL NUMBERS TO PHYSICAL TRANSMISSION CHANNELS FOR WIRELESS PROTOCOL-ORIENTED INFORMATION EXCHANGE

PROCEDE D'ATTRIBUTION DE NUMEROS DE CANAUX A DES CANAUX DE TRANSMISSION PHYSIQUES POUR L'ECHANGE DE DONNEES SANS FIL, ORIENTE PROTOCOLE

(84) Benannte Vertragsstaaten:
**DE ES FR GB IT NL**

(30) Priorität: **24.04.1998 DE 19818510**

(43) Veröffentlichungstag der Anmeldung:
**07.02.2001 Patentblatt 2001/06**

(73) Patentinhaber: **SIEMENS AKTIENGESELLSCHAFT**
**80333 München (DE)**

(72) Erfinder: **LENFORT, Christoph**
**D-48356 Nordwalde (DE)**

(56) Entgegenhaltungen:
**US-A- 4 392 242      US-A- 5 678 189**

**Beschreibung**

Die Erfindung betrifft ein Verfahren zur Zuordnung von Kanalnummern zu physikalischen Übertragungskanälen für den drahtlosen, protokollorientierten Informationsaustausch in einem standardisierten Telekommunikationsnetz, insbesondere DECT-System, mit mindestens einer Basisstation und einer Mobilstation gemäß Oberbegriff des Patentanspruches 1.

Schnurlose Telefone oder schnurlose Telekommunikationsanlagen finden seit einigen Jahren breite Anwendung. Durch zunehmenden Einsatz derartiger Einrichtungen ergibt sich die Notwendigkeit, letztendlich auch unter dem Aspekt der Abhörsicherheit die Kommunikation zwischen einer Basisstation und einem Mobilteil zu standardisieren.

In Europa erfolgte über das European Telecommunications Standards Institute die Festlegung auf den DECT-Standard (Digital Enhanced - vormals: European-Cordless Telecommunication). DECT-Systeme basieren auf dem drahtlosen Informationsaustausch zwischen Basis- und Mobilstationen, wobei die Reichweite innerhalb einer Funkzelle bis zu einigen hundert Metern beträgt. Die DECT-Frequenzbereiche liegen zwischen 1880 und 1900 Mhz. Der DECT-Standard kann sowohl bei Einzelzellanordnungen, z.B. drahtlosen Heimtelefonen, als auch in Mehrfachfunkzellen-Anordnungen, z.B. einem Corporate Network Verwendung finden. Die Funkprotokolle sind so gestaltet, daß auch ein Betreiben mehrerer Basis- und Mobilstationen in derselben physikalischen Umgebung möglich ist, indem eine Einteilung des Frequenzspektrums in eine vorgegebene Anzahl von physikalischen Kanälen vorgenommen wird.

Konkret sieht der DECT-Standard eine feste Zuordnung zwischen physikalischen DECT-Kanälen und logischen Kanalnummern vor. Als Mittenfrequenzen werden im DECT-Standard für ein unteres Frequenzband $Fc = F0 - c \times 1,728$ MHz mit $F0 = 1897,344$ Mhz und $c = 0,1,...,9$ und für ein oberes Frequenzband eine Mittenfrequenz $Fc = F9 + c \cdot 1,728$ Mhz mit $c = 10, 11, 12, ...$ festgelegt. Einem Frequenzbereich $Fc - 1,728/2$ MHz und $Fc + 1,728/2$ MHz ist die DECT-Kanalnummer c zugeordnet.

Die in oben beschriebener Weise erfolgende Definition und starre Zuordnung von Kanalnummern zu physikalischen Übertragungskanälen ermöglicht das Ausführen der Übertragungs- und Kommunikationsprozeduren auch dann, wenn verschiedene Teilnehmer in einem lokalen Netz eines DECT-Systems aktiv sind. Voraussetzung ist jedoch, daß Basisstationen und Mobilstationen bereits herstellerseitig entsprechend dem Standard bzw. der starren, für das Einzugsgebiet geltenden Kanalnummernzuordnung zu den Übertragungskanälen gestaltet sind. Dies führt jedoch zu höheren Kosten, wenn die betreffende Technik ohne Einschränkung der Kompatibilität auf einem globalen Markt Verwendung finden soll.

Es ist daher Aufgabe der Erfindung, ein Verfahren zur Zuordnung von Kanalnummern zu physikalischen Übertragungskanälen für den drahtlosen, protokollorientierten Informationsaustausch in einem standardisierten Telekommunikationsnetz, insbesondere DECT-System, mit mindestens einer Basisstation und einer Mobilstation anzugeben, das es gestattet, ausgehend von einer vorgegebenen Definition der physikalischen Kanäle und einer Festlegung der Reihenfolge von Kanalnummern Basisstationen und Mobilstationen zu realisieren, die auch in Bereichen unterschiedlicher Kanalnummer-Frequenzbeziehungen oder im Zusammenwirken mit anderen Systemen betrieben werden können, so daß ein manuelles Einstellen oder Umstellen oder der Austausch von z.B. Mobilstationen entfallen kann.

Die Lösung der Aufgabe der Erfindung erfolgt mit einem Verfahren, wie es im geltenden Anspruch 1 definiert ist, wobei die Unteransprüche zweckmäßige Ausgestaltungen und Weiterbildungen umfassen.

Der Grundgedanke der Erfindung besteht nun darin, von einer im DECT-Standard festgelegten starren Zuordnung von Kanalnummern und physikalischen Kanälen abzuweichen und den Basisstationen die Möglichkeit der flexiblen Zuweisung von logischen Kanalnummern zu physikalischen Kanälen zu geben.

Die Basisstation weist hierfür den physikalischen Übertragungskanälen der Mobilstation eine logische Kanalnummer zu, indem die Basisstation die logische Kanalnummer sendet, welche vorab dem dafür verwendeten physikalischen Übertragungskanal zugeordnet wurde. Unter der Festlegung, daß die Basisstation lediglich die Kanalnumerierung ausgehend vom vorgegebenen Standard oder einer Kanalnummer-Reihenfolge in einen anderen Frequenzbereich verschiebt, jedoch die Reihenfolge selbst beibehalten wird, kann in einfacher Weise eine Mobilstation oder ein Mobilteil durch Abgleich der physikalischen Kanalnummer mit der zugewiesenen logischen Kanalnummer die vorgenommene Verschiebung für alle weiteren Kanäle nachvollziehen, so daß sich eine Synchronisation einstellt und gemäß den Funkprotokollen eine übliche Kommunikation und Arbeitsweise zwischen Basis- und Mobilstation erfolgen kann bzw. abgewickelt wird.

Demnach wird erfindungsgemäß ausgehend von der Festlegung physikalischer Übertragungskanäle in einem vorgegebenen Frequenzband sowie der Vorgabe von einer Anzahl und einer Reihenfolge von Kanalnummern entsprechend dem jeweiligen Standard, z.B. dem DECT-Standard, die Basisstation in die Lage versetzt, einem der physikalischen Übertragungskanäle eine logische Kanalnummer aus der Anzahl der Kanalnummern zuzuordnen. Hierdurch resultiert quasi eine flexible Verschiebung der physikalischen Übertragungskanäle in einen anderen Frequenzbereich bei gleicher Numerierungsreihenfolge der Kanäle. Die Basisstation sendet die logische Kanalnummer im zugehörigen physikalischen Übertragungskanal. Diese wird von der Mobilstation empfangen, so daß letztere veranlaßt ist, die erforderliche Synchronisation bezogen auf die aktuell vorgegebene Zuordnung herzustellen.

In einer besonders zweckmäßigen Ausgestaltung der Erfindung teilt die Basisstation auf der Grundlage einer Ordnungsvorschrift die logische Kanalnummer dem physikalischen Übertragungskanal zu. Mit Hilfe dieser Ordnungsvorschrift wird das bzw. werden die Mobilteile in die Lage versetzt, die Synchronisation entsprechend der Kanalmatrix durchzuführen.

Sendet die Basisstation eine Kanalnummer Nx auf einem physikalischen Kanal Cx, so ist dadurch die Ordnungsvorschrift N(c) = f(c, Cx, Nx) zur Zuordnung einer logischen Kanalnummer N zu einem physikalischen Kanal c eindeutig definiert durch Cx und Nx. Sie kann für alle c von einer oder mehreren Mobilstationen nachvollzogen werden.

Durch die erfindungsgemäße Verfahrensweise der flexiblen Kanalnummernzuordnung und Synchronisation zwischen Basis- und Mobilstationen können bestehende Funkprotokolle (GAP) gegebenenfalls lediglich in wenigen Parametern modifiziert auf andere Standards oder lokale Systeme unterschiedlicher Konfiguration übertragen werden, insbesondere solche DECT-Systeme, bei denen ausgehend vom Stand der Technik andere als die Frequenzen F0 bis F9 verfügbar sind.

Die Erfindung soll anhand eines Ausführungsbeispiels für die Synchronisation der Kanalnummernzuordnung in DECT-Systemen unter Hinweis auf die Figuren näher erläutert werden.

Hierbei zeigen:

Figur 1 eine beispielhafte Kanalnummerzuordnung vor und nach erfolgter Synchronisation und

Figur 2 einen prinzipiellen Ablauf einer Meldungsauswertung zur Synchronisation sowie den Ablauf bei hergestellter Synchronisation.

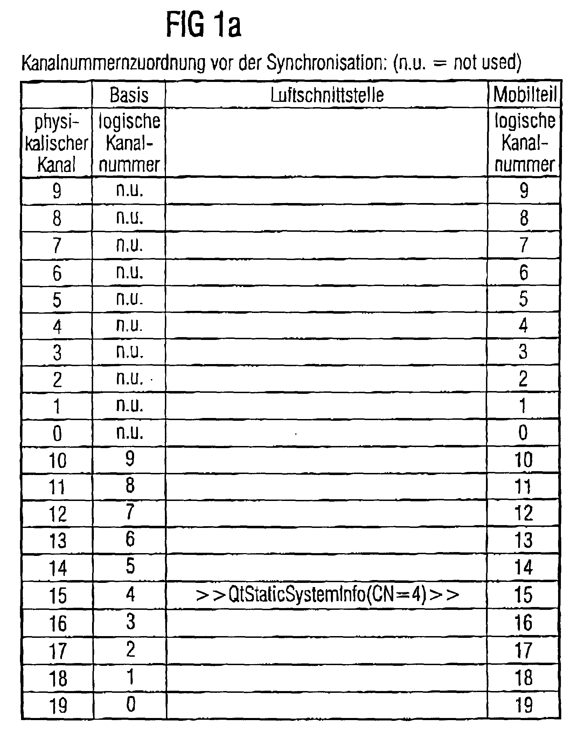

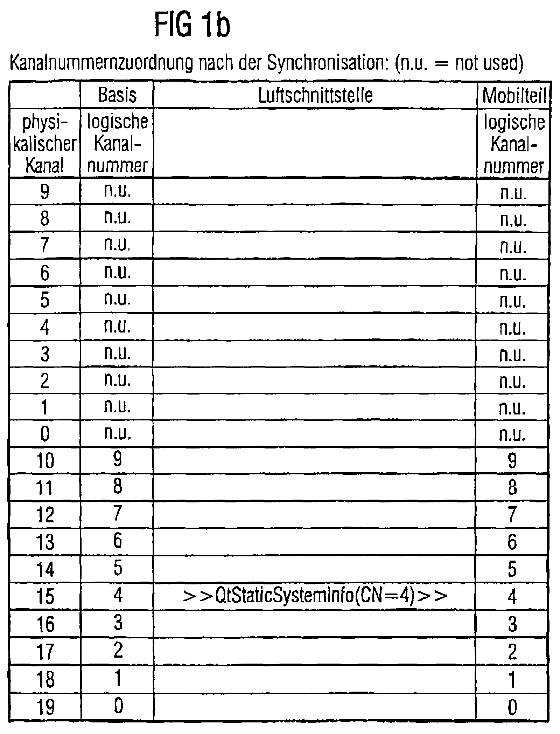

Die Figur 1 stellt eine tabellarische Kanalnummernzuordnung vor und nach der erfolgten Synchronisation zwischen Basis- und Mobilstation dar.

Gemäß Figur 1 wird von einer DECT-Basisstation ausgegangen, die die physikalischen DECT-Frequenzen 10 bis 19 benutzt, diesen aber flexibel die Kanalnummern 9 bis 0 zuordnet. Das Mobilteil unterstützt die DECT-Frequenzen 9 bis 0 und 10 bis 19.

Über das Protokollelement CN (Kanal) wird mittels der standardisierten QT-Static-System-Info (Standard und Formate nach ETS 300 175-3) und der Luftschnittstelle eine Kanalnummernzuweisung und Synchronisation vorgenommen. Dadurch, daß das entsprechende Protokollelement bereits gemäß Standard nach DECT vorgesehen ist, kann in vorteilhafter Weise hierauf zurückgegriffen werden, ohne die MAC-Steuerung (Medium Access Control) verändern zu müssen.

Durch das Verfahren der flexiblen Kanalnummernzuordnung können bestehende GAP-Implementationen, d. h. vorhandene Funkprotokolle leicht modifiziert auf Netze übertragen werden, welche bezogen auf den relevanten Frequenzbereich eine andere Kanalverteilung oder -zuordnung aufweisen.

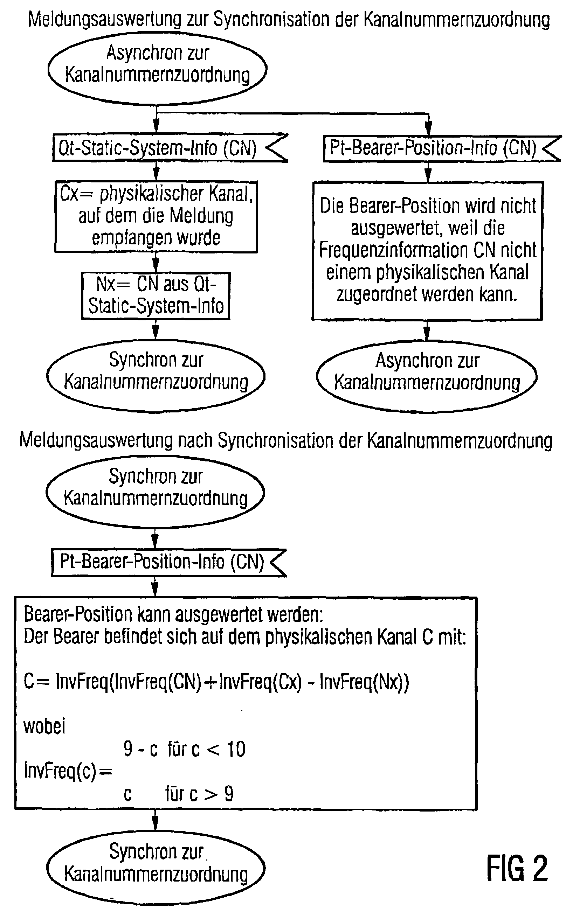

Die Figur 2 zeigt den Ablauf der Meldungsauswertung vor und nach Synchronisation der Kanalnummernzuordnung innerhalb einer Mobilstation, z. B. einem DECT-Handy bzw. einem entsprechenden schnurlosen Handgerät. Die betreffenden Informationen werden über eine Luftschnittstelle gemäß definierten Funkprotokollen übertragen. Die Mobilstation wird nach Empfang und Informationsauswertung veranlaßt aus der QT-Static-System-Info das Protokollelement CN zu lesen und hieraus die logische Kanalnummer zu ermitteln, wodurch die erforderliche Synchronisation hergestellt werden kann. Dadurch, daß die Frequenzinformation CN nun einem Kanal zuordenbar ist, besteht die Möglichkeit die Pt-Bearer-Position-Info auszuwerten, wie dies im unteren Teil des Ablaufplanes nach Figur 2 gezeigt ist.

Mit der beschriebenen Kanalnummernzuordnung sowie der vorgesehenen Synchronisation lassen sich Basisstationen und Mobilteile realisieren, die sowohl zu einer Systemfamilie A gehören, welche von z.B. derzeit 11 freigegebenen Frequenzen für DECT-Systeme in Südamerika die unteren zehn Frequenzen nutzen als auch zu einer Systemfamilie B kompatibel sind, die die oberen zehn Frequenzen des betreffenden Bandes belegen.

**Patentansprüche**

1. Verfahren zur Zuordnung von Kanalnummern zu physikalischen Übertragungskanälen für den drahtlosen, protokollorientierten Informationsaustausch in einem standardisierten Telekommunikationsnetz, insbesondere DECT-System, mit mindestens einer Basisstation und einer Mobilstation,
**dadurch gekennzeichnet, daß**

ausgehend von der Festlegung physikalischer Übertragungskanäle in einem vorgegebenen Frequenzband sowie der Vorgabe von einer Anzahl und einer Reihenfolge von Kanalnummern entsprechend dem jeweiligen Standard die Basisstation einem der physikalischen Übertragungskanäle $c_x$ eine logische Kanalnummer $N_x$ aus der Anzahl der Kanalnummern zuordnet, so daß eine flexible Verschiebung der physikalischen Übertragungskanäle in einen anderen Frequenzbereich bei gleicher Numerierungsreihenfolge realisierbar ist, und weiterhin die Basisstation die logische Kanalnummer Nx in oder für den zugehörigen physikalischen Übertragungskanal $c_x$ sendet, welche von der mindestens einen Mobilstation empfangen wird, um die Mobilstation zu veranlassen, eine Synchronisation zur aktuell vorgegebenen Zuordnung herzustellen.

**2.** Verfahren nach Anspruch 1,
**dadurch gekennzeichnet, daß**
die Basisstation auf der Grundlage einer Ordnungsvorschrift die logische Kanalnummer dem physikalischen Übertragungskanal zuteilt, wobei über diese Ordnungsvorschrift die mindestens eine Mobilstation die Synchronisation entsprechend der Kanalmatrix durchführt.

**3.** Verfahren nach Anspruch 2,
**dadurch gekennzeichnet, daß**
die logische Kanalnummer N(c) eines physikalischen Übertragungskanals (c) nach folgender Ordnungsvorschrift definiert ist:

$$N(c) = InvFreq(InvFreq(c) - (InvFreq(C_x) - InvFreq(N_x))),$$

mit

$$InvFreq(c) = \begin{cases} c & \text{für } c > 9 \\ (9-c) & \text{für } c < 10. \end{cases}$$

**4.** Verfahren nach einem der vorangegangenen Ansprüche,
**dadurch gekennzeichnet, daß**
mittels Synchronisation der flexiblen vorgebbaren Kanalnummernzuordnung Mobilstationen mit Basisstationen unterschiedlicher Funkprotokolle oder unterschiedlicher Frequenzbänder betreibbar sind.

**Claims**

**1.** Method for allocating channel numbers to physical transmission channels for the wireless, protocol-oriented exchange of information in a standardized telecommunication network, especially a DECT system, comprising at least one fixed part and one portable part, **characterized in that**, on the basis of the establishment of physical transmission channels in a predetermined frequency band and the predetermination of a number of and of an order of channel numbers corresponding to the respective standard, the fixed part allocates to one of the physical transmission channels $c_x$ a logical channel number $N_x$ of the number of channel numbers so that a flexible displacement of the physical transmission channels into another frequency range whilst retaining the same numbering order can be achieved, and, furthermore, the fixed part sends the logical channel number $N_x$ in or for the associate physical transmission channel $c_x$ which is received by at least one portable part in order to cause the portable part to establish synchronization with the currently predetermined correlation.

**2.** Method according to Claim 1, **characterized in that** the fixed part allocates the logical channel number to the physical transmission channel on the basis of an ordering rule, the at least one portable part performing the synchronization in accordance with the channel matrix via this ordering rule.

**3.** Method according to Claim 2, **characterized in that** the logical channel number N(c) of a physical transmission channel (c) is defined in accordance with the following ordering rule:

$$N(c)=InvFreq(InvFreq(c)-(InvFreq(C_x)-InvFreq(N_x))),$$

where

$$InvFreq(c) = \begin{cases} c & \text{for } c > 9 \\ (9-c) & \text{for } c < 10. \end{cases}$$

**4.** Method according to one of the preceding claims, **characterized in that** portable parts can be operated with fixed parts of different radio protocols or different frequency bands by means of synchronization of the flexible predeterminable channel number allocation.

**Revendications**

**1.** Procédé destiné à attribuer des numéros de canaux à des canaux physiques de transmission pour l'échange d'informations sans fil et à orientation protocole, dans un réseau de télécommunication standardisé, notamment dans un système DECT, avec au moins une station de base et un poste mobile, **caractérisé par le fait**

**que**, en partant d'une définition des canaux physiques de transmission dans une gamme de fréquences déterminée et d'une règle fixant le nombre et l'ordre des numéros de canaux, en accord avec la norme respective, la station de base affecte, à un des canaux physiques de transmission $C_x$, un numéro logique de canal $N_x$, tiré du nombre de numéros de canaux, de telle sorte qu'est réalisé un déplacement souple des canaux physiques de transmission dans une autre plage de fréquences tout en conservant le même ordre de numérotation et,

en outre, la station de base émet le numéro logique de canal $N_x$ sur ou pour le canal physique de transmission correspondant $C_x$, lequel est reçu par au moins un poste mobile, pour inciter le poste mobile à effectuer une synchronisation sur l'attribution prédéterminée actuellement.

**2.** Procédé selon la revendication 1
**caractérisé par le fait**
**que** la station de base affecte, sur la base d'une prescription concernant l'ordre des numéros, le numéro logique de canal au canal physique de transmission, le au moins un poste mobile effectuant, par l'intermédiaire de cette prescription concernant l'ordre des numéros, la synchronisation en accord avec la matrice du canal.

**3.** Procédé selon la revendication 2
**caractérisé par le fait**
**que** le numéro logique du canal N(c) d'un canal physique de transmission (c) est défini selon la prescription suivante concernant l'ordre des numéros:

$$N(c) = InvFreq (InvFreq(c) - (InvFreq(c_x) - InvFreq(N_x))),$$

avec

$$InvFreq(c) = \begin{cases} c & \text{pour } c > 9 \\ (9 - c) & \text{pour } c < 10. \end{cases}$$

**4.** Procédé selon l'une des revendication précédentes
**caractérisé par le fait**
**que**, au moyen de la synchronisation de l'attribution souple, qui peut être prédéterminée, des numéros de canaux, des postes mobiles peuvent être exploités avec des stations de base ayant des protocoles radio différents ou des gammes de fréquences différentes.

# FIG 1a

Kanalnummernzuordnung vor der Synchronisation: (n.u. = not used)

| physi-kalischer Kanal | Basis<br>logische Kanal-nummer | Luftschnittstelle | Mobilteil<br>logische Kanal-nummer |
|:---:|:---:|:---:|:---:|
| 9 | n.u. | | 9 |
| 8 | n.u. | | 8 |
| 7 | n.u. | | 7 |
| 6 | n.u. | | 6 |
| 5 | n.u. | | 5 |
| 4 | n.u. | | 4 |
| 3 | n.u. | | 3 |
| 2 | n.u. · | | 2 |
| 1 | n.u. | | 1 |
| 0 | n.u. | · | 0 |
| 10 | 9 | | 10 |
| 11 | 8 | | 11 |
| 12 | 7 | | 12 |
| 13 | 6 | | 13 |
| 14 | 5 | | 14 |
| 15 | 4 | >>QtStaticSystemInfo(CN=4)>> | 15 |
| 16 | 3 | | 16 |
| 17 | 2 | | 17 |
| 18 | 1 | | 18 |
| 19 | 0 | | 19 |

# FIG 1b

Kanalnummernzuordnung nach der Synchronisation: (n.u. = not used)

| | Basis | Luftschnittstelle | Mobilteil |
|---|---|---|---|
| physi-kalischer Kanal | logische Kanal-nummer | | logische Kanal-nummer |
| 9 | n.u. | | n.u. |
| 8 | n.u. | | n.u. |
| 7 | n.u. | | n.u. |
| 6 | n.u. | | n.u. |
| 5 | n.u. | | n.u. |
| 4 | n.u. | | n.u. |
| 3 | n.u. | | n.u. |
| 2 | n.u. | | n.u. |
| 1 | n.u. | | n.u. |
| 0 | n.u. | | n.u. |
| 10 | 9 | | 9 |
| 11 | 8 | | 8 |
| 12 | 7 | | 7 |
| 13 | 6 | | 6 |
| 14 | 5 | | 5 |
| 15 | 4 | >>QtStaticSystemInfo(CN=4)>> | 4 |
| 16 | 3 | | 3 |
| 17 | 2 | | 2 |
| 18 | 1 | | 1 |
| 19 | 0 | | 0 |

Meldungsauswertung zur Synchronisation der Kanalnummernzuordnung

Asynchron zur
Kanalnummernzuordnung

Qt-Static-System-Info (CN)

Cx= physikalischer Kanal,
auf dem die Meldung
empfangen wurde

Nx= CN aus Qt-
Static-System-Info

Synchron zur
Kanalnummernzuordnung

Pt-Bearer-Position-Info (CN)

Die Bearer-Position wird nicht
ausgewertet, weil die
Frequenzinformation CN nicht
einem physikalischen Kanal
zugeordnet werden kann.

Asynchron zur
Kanalnummernzuordnung

Meldungsauswertung nach Synchronisation der Kanalnummernzuordnung

Synchron zur
Kanalnummernzuordnung

Pt-Bearer-Position-Info (CN)

Bearer-Position kann ausgewertet werden:
Der Bearer befindet sich auf dem physikalischen Kanal C mit:

$C = InvFreq(InvFreq(CN) + InvFreq(Cx) - InvFreq(Nx))$

wobei

$$InvFreq(c) = \begin{cases} 9 - c & \text{für } c < 10 \\ c & \text{für } c > 9 \end{cases}$$

Synchron zur
Kanalnummernzuordnung

FIG 2